# EUROPEAN PATENT APPLICATION

(11) **EP 3 644 558 A1**
(43) Date of publication of application: **29.04.2020**
(21) Application number: 18202058.6
(22) Date of filing: 23.10.2018
(51) Int. Cl.: H04L 12/26

(54) **TESTING OF NETWORK FUNCTIONS OF A COMMUNICATION SYSTEM**

(71) Applicant: Siemens Aktiengesellschaft, 80333 München (DE)
(72) Inventor: Sauer, Markus, 81739 München (DE); Zeiger, Florian, 85635 Höhenkirchen-Siegertsbrunn (DE)

(57) **Abstract**

An object of the invention is to facilitate audited testing of network functions, wherein multiple stakeholders can prove or validate system performance in a traceable manner. The invention is directed to a test system for auditing testing of network functions, which comprises a test case repository node, adapted to provide test cases. The test system further comprises a node for establishing at least one parameterized test case with a retrieval module, a parameterization module, and an auditing module. The retrieval module is adapted to retrieve at least one of the test cases from the test case repository node. The parameterization module is adapted to establish the at least one parameterized test case by applying test parameters to the at least test case. The auditing module is adapted to write, to a distributed database, a test specification comprising an identifier of the at least one parameterized test case.

## Description

### TECHNICAL FIELD

The invention relates to the field of communication systems and testing their configurations and respective network functions, and more particularly is directed to a test system for auditing testing of network functions of a communication system, a node for establishing at least one parameterized test case, a node for testing of network functions of a communication system, and a method for audited testing of network functions.

### BACKGROUND

Data networks typically implement features through network functions. Hence, computational devices such as customer nodes, user equipment, mobile terminals, industrial control devices, industrial machine devices, or Internet-of-Things devices usually access and/or connect to a data network via one or more network functions, which are provided by the network to the respective device, node or equipment.

Sometimes a data network provides the network functions by one or more communication systems, which implement some or all of the provided network functions. In particular, the data network may provide several functions and parameters to devices or customer nodes, such as a data transfer function, a channel for voice transmission, a function for configuring communication nodes, a communication service management function and their respective parameters, as well as several parameters defining a state, mode or setup of the data network and/or of the device/customer node/equipment; such parameters are, e.g., communication protocols, data transfer rates, an address space of the data network, an address of the customer node and/or physical configurations or layers of the data network.

Currently, network functions, their functional specifications, the devices or nodes accessing the data network or, respectively, the communication system and further agreements between a service provider providing these network functions and customers using these network functions are usually defined in a written contract. Moreover, the data network or parts of it, in particular some of the communication systems, may be provided by another party. Therefore, multiple stakeholders - e.g. a network provider, a network operator and a customer or network subscriber - take part in using and providing network functions.

While the network functions and respective configurations of the data network and/or communication system may be specified in a written contract, it is still necessary to deploy the configuration, i.e. to set up the data network/communication system to provide the network functions as specified. Such written contracts are also called service level agreements.

For industrial communication services industrial grade quality of service, guaranteed resource assignment, and the corresponding service level agreements are a must. Besides basing these service level agreements on a written contract, such service level agreements may also be specified by computer readable automated contracts or other means which define the respective stakeholders and required network functions and parameters.

Bearing in mind the different stakeholders and the increasing need to quickly adapt to changing requirements, which results in specifying and using adequate service level agreements and providing respective network functions, gives rise to a complex overall system. Yet, it is necessary to ensure proper operation within the overall system. For an industrial communication system providing network functions to a manufacturing site it may, e.g., be necessary to ensure a certain minimum guaranteed data transfer rate and/or certain maximum transmission delays, which may be required for reliably controlling the manufacturing site.

### SUMMARY

There is a demand to facilitate testing of network functions, and more particular for auditing and automating such testing, wherein stakeholders are provided with defined tests for network functions, technical performance indicators of network functions and a measure for validating system performance. Moreover, depending on the actual service level agreement and communication service, different levels of detail of such testing and performance indicators may be required.

This demand is met by the teaching of each of the independent claims, specifically by a test system for auditing testing of network functions, by a node for establishing at least one parameterized test case, by a node for testing of network functions, and by a method for audited testing of network functions. Various embodiments, advantageous modifications and further improvements are provided, in particular, by the teachings of the dependent claims.

A first aspect of the present invention is directed to a test system for auditing testing of network functions of a communication system or a data network comprising a communication system. The test system comprises a test case repository node that is adapted to provide one or more test cases for the network functions. The test system further comprises a node for establishing at least one parameterized test case. The node for establishing at least one parameterized test case comprises a retrieval module, a parameterization module, and an auditing module. The retrieval module is adapted to retrieve at least one of the test cases from the test case repository node. The parameterization module is adapted to apply one or more test parameters to the at least one of the test cases, thereby establishing the at least one parameterized test case. The auditing module is adapted to write, to a distributed database, a test specification comprising an identifier of the at least one parameterized test case.

In the sense of the present invention a "distributed database" is a database that is distributed over a multitude of computational nodes, wherein transactions to the database depend on a consensus between the computational nodes, and wherein the computational nodes may be geographically spread across multiple sites, locations, countries or organizations. Such a consensus may be established by a consensus algorithm, like proof of work, proof of stake, or a voting system. In particular, the distributed database may be implemented as a blockchain.

In a sense of the present invention a "test case" is a collection of data that contains elements which are required for performing a test of one or more network functions. Moreover, a test case may be parameterized, i.e. be a parameterized test case, wherein one or more test parameters of this test case are set to specific values in order to perform the testing of one or more specific network functions and/or of a specific communication system or a specific part of it.

The test case repository node advantageously allows to retrieve the test cases from a specific and thus well-defined node, i.e. the test case repository node. Moreover, additional test cases may be stored in the test case repository node, thereby facilitating the introduction of additional test cases. An advantage of the parameterization module may particularly be that the test case may be stored and retrieved from the test case repository node in a predefined, template-based and/or generic representation, wherein the specific parameters for performing the test case - such as IP addresses, network nodes or communication protocols - are applied to the test case when specifically required, whereby the number of test cases may be reduced, while facilitating testing a multitude of different communication systems, network nodes, and/or their configurations or configured network functions. An advantage of the auditing module may particularly be that the test case may be identified by the identifier of the test specification, which facilitates auditing of the testing of the network functions, because the test case to be performed is stored in the distributed database, and thus may be tamperproof. Furthermore, compared to an identifier of a (generic) test case the identifier of the at least one parameterized test case may advantageously improve traceability of the test case. Therefore, an advantage of the test system may particularly be, that the testing of network functions may be audited by using - i.e. by retrieving and later on performing/conducting - specific and identifiable test cases and by retrieving - e.g. later on - which test case has been conducted and how it performed from the distributed database.

According to some embodiments, the test system may further comprise a node for testing the communication system, wherein the node comprises a deployment module and/or a monitoring module. The deployment module is adapted to transmit a deployment signal, the deployment signal being indicative of the at least one parameterized test case, thereby triggering execution of the at least one parameterized test case by the communication system. The monitoring module is adapted to receive test data generated by the execution of the at least one parameterized test case. Thereby, the at least one parameterized test case may advantageously be deployed and executed by the communication system in an automated manner. Compared to an end-to-end test, which requires setting up each specific test on both "ends", i.e. network nodes or communication nodes of the communication system to be tested - the overall complexity of testing the communication system (or data network comprising the communication system) may be reduced, and thus testing of network functions may be improved and/or be more reliable and/or simplified. This may beneficially combine with the monitoring module, whereby also the test data generated by the execution of the at least one parameterized test case may be received in an automated manner. Therefore, an advantage of the node for testing the communication system may particularly be, that the at least one parameterized test case may be conducted in an automated manner, whereby ensuring proper operation of data networks/communication systems is simplified and made more reliable, i.e. by making the setup as well as the conducting of the test case traceable and tamperproof such that, in particular, retrieval of the at least one test case, its parameterization, its deployment and execution, and test data generated by it may be audited.

In some embodiments, in which the test system comprises a node for testing the communication system, the test system may further comprise a reporting module. The reporting module is adapted to write, to the distributed database, a test report based on the test data. Thereby, results of the at least one parameterized test case such as a validation of system performance and technical performance indicators may be stored may be stored as the test report in a tamperproof manner, and thus, in particular, rendering the testing of the network functions (by means of this test case) auditable. Hence, the test report may be retrieved from the distributed database for later evaluation and/or as a proof of providing network functions according to a specific service level agreement.

In some embodiments, in which the node for testing the communication system comprises a reporting module, the reporting module is further adapted to sign, by a digital signature for the node for testing the communication system, the test report. This may beneficially improve the traceability of the testing of the network functions.

In some embodiments, in which a monitoring module is adapted to receive test data, the test data may comprise monitoring data, which indicates a course of the execution of the at least one parameterized test case, and/or measurement data, which indicates a performance of one or more tested network functions of the network functions of the communication system. An advantage of the monitoring data may particularly be, that the execution of the at least one parameterized test case may be traced. An advantage of the measurement data may particularly be that the performance of the tested network functions may be monitored, whereby compliance or non-compliance with a service level agreement may be proved and/or technical performance indicators such as data throughput may be documented.

In some embodiments, in which the test system comprises a reporting module and in which the test data comprises monitoring data and measurement data, the reporting module is adapted to establish the test report based on the monitoring data, the measurement data, and the one or more test parameters. Thereby, a test coverage may be written to the distributed database, and thus, when testing one or more of the network functions provided by the communication system, their performance as well as methods for testing their performance may, in a traceable and tamperproof manner, be traced, audited, and stored for later evaluation and/or as a proof.

According to some embodiments the at least one test case comprises at least one test procedure for testing at least one of the network functions of the communication system and defines a course of execution of the at least one test procedure. Thereby, conducting the testing of the at least one of the network functions may be a facilitated.

In some embodiments, in which the at least one test case comprises at least one test procedure, the at least one test case further comprises at least one traffic generator and at least one measurement probe. The at least one test procedure is adapted to test a data throughput capacity of the at least one of the network functions and/or a respective timing - such as latency - by applying traffic data, which is generated by means of the at least one traffic generator, to the at least one of the network functions at a first node of the communication system and by measuring, at the first or at a second node of the communication system, a resulting traffic data or a resulting timing by means of the at least one measurement probe. This may advantageously improve auditing the testing of the network functions. An advantage of the traffic generator of the at least one test case may particularly be, that the traffic for testing data throughput and/or respective timing is determined and audited and thus specified and traceable for later evaluation. An advantage of the at least one measurement probe of the at least one test case may particularly be that the means of probing the reciting traffic data or reciting timing may be deployed to one of the nodes of the communication system in an automated manner and/or may be determined and thus test data generated by this at least one test procedure and, in particular, measured by the at least one measurement probe is auditable and its meaning can be evaluated in a defined manner.

According to some embodiments, the at least one test case comprises a test procedure, a further test procedure, a traffic generator, a measurement probe, and/or a respective description.

Therefore, the at least one test case may advantageously comprise some or all elements required for performing the testing of the network functions. Thereby, the testing of the network functions or some of the network functions may be automated, wherein respective test cases are deployed to one or more nodes of the communication system or a data network, those network functions are to be tested. Moreover, comprising respective test procedures etc. may advantageously allow to adapt the at least one test case or to provide respective test cases depending on the required level of details of testing and resulting performance indicators.

According to some embodiments, the at least one of the network functions of the communication system is a virtual network function. Moreover, the communication system or a data network, in particular comprising the communication system, may be adapted to provide two or more network functions as virtual network functions.

Within the meaning of the present disclosure a "virtual network function" may refer to a software implementation of a network function. Such a virtual network function may run on the communication system/a communication system of a data network, wherein the data network and/or the communication system is adapted for providing virtual network functions, and wherein the network function may be deployed to such a communication system. The communication system may comprise one or more communication nodes, wherein the virtual network function to be deployed on the communication system runs as a software implementation on one or more of these nodes, in particular, instead of having custom hardware devices for each network function. More specifically, a virtual network function may be one of a firewall, an intrusion detection device, a load balancer, a control channel, a data channel and a data connection between at least two nodes of a data network.

In the sense of the present invention a "service-level agreement" at least represents a configuration of a network function and at least one node which accesses the data network and/or the communication system. In particular the node may be a customer node. Moreover, the service level agreement may specify certain hardware requirements and/or agreements, identifiers of selected network functions and/or certain functional parameters, which may have been agreed upon between a provider and a customer. Such hardware requirements may comprise transfer rates, digital bandwidth capacity, latency, a level of redundancy, and/or a location of communication nodes or customer nodes, which may exchange data via a network function. Such functional parameters may comprise address spaces, port ranges or parts, data handling or filtering capacity for data traffic over network functions, logical configurations of a data network or communication system, and/or computing capacity or memory capacity for the network functions. In particular, the network function may be a virtual network function or a network function based on a hardware device. Furthermore, the preceding specifications may be allocated to one or more service levels, which may differ in terms of the preceding specifications. Therefore, network functions may be activated or deactivated based on respective service level agreements, which advantageously facilitates providing network functions and adapting communication services to - possibly changing - requirements.

An advantage of virtual network functions may particularly be that network functions provided by the data network and/or the communication system may be adapted or changed without changing the underlying hardware. By providing the at least one test case for the at least one network function that is implemented as a virtual network function, also the performance of the virtual network function and/or the compliance with a respective service level agreement may be validated and tested in an automated, traceable and/or auditable manner, whereby, in particular, flexibility of providing network functions and/or reliability of using network functions is increased.

According to some embodiments, the communication system or a data network comprising the communication system may be configured to provide one or more network functions, in particular virtual network functions, based on a network configuration. Furthermore, this network configuration may be specified in a service level agreement.

According to some embodiments, the retrieval module is further adapted to read, from the distributed database, a network configuration according to which the communication system provides its network functions. Furthermore, the retrieval module is further adapted to select the at least one of the test cases based on the network configuration, and to request, from the test case repository node, the at least one test case. Thereby, the at least one test case may be specifically requested for the network configuration of the communication system.

According to some embodiments, the auditing module is further adapted to sign, by a digital signature for the node for establishing at least one parameterized test case, the test specification. Thereby, the origin of the parameterized test case may be proven in a cryptographically safe way, whereby auditability and traceability of the testing is improved.

According to some embodiments the test case repository node comprises a digital signature module and a provider module. The digital signature module is adapted to transmit a signature key request signal to the distributed database and to receive a signing key from the distributed database. In some advantageous modifications, the signature key request signal is adapted to trigger the distributed database to provide the signature key for the at least one test case and to store a respective validation key, in particular to write the respective validation key to the distributed database. Moreover, the provider module is adapted to provide the at least one test case and to sign, by a digital signature for the test case repository node, the at least one test case, wherein the digital signature is based on the signing key received by the digital signature module. Thereby, it may be cryptographically be proven that the at least one test case originates from the test case repository node, whereby traceability of preparing/setting-up the testing of the network functions - e.g. by retrieving and parameterizing the at least one test case - may be improved. Moreover, by storing the respective validation key in the distributed database, also the auditing of the testing - in particular the preparation of the testing - may be audited in an improved manner by cryptographically validating the digital signature, wherein the authenticity of the respective validation key is ensured by the distributed database. An advantage of providing the signature key for the at least one case may particularly be, that the provider module can provide/sign only test cases for which the distributed database provides a (specific) signature key, whereby security and/or reliability may be enhanced. In some advantageous modifications, the distributed database may determine whether the at least one case is applicable - i.e. may, in particular, proof the proper functioning - of the communication system. This may particularly be based on a network configuration of the communication system and the signature key request signal being specific for the at least one test case.

According to some advantageous modifications, the provider module may be adapted to embed the digital signature for the test case repository node and/or the signing key received from the distributed database for the at least one test case into the at least one test case. Furthermore, the retrieval module may be adapted to retrieve the at least one test case including the digital signature or the signing key from the test case repository node. Moreover, the auditing module may be further adapted to establish, based on the signing key received via the test case repository node from the distributed database, the digital signature for the node for establishing at least one parameterized test case or, alternatively, the auditing module may be further adapted to use the digital signature for the test case repository node as the digital signature for the node for establishing at least one parameterized test case - i.e. both digital signatures are based on the same signing key or are even, in the alternative, identical. In yet a further modification, the reporting module may further be adapted to establish the digital signature for the node for testing the communication system based on the signing key retrieved from the distributed database or, alternatively, use the digital signature for the test case repository node as the digital signature for the node for testing the communication system. An advantage of using the same digital signature or of establishing digital signatures based on the same signing key - i.e. the signing key received from the distributed database - may particularly be that these digital signatures may be validated by the respective validation key stored in the distributed database, whereby providing a tamperproof testing may be simplified.

According to an alternative and advantageous modification, some or all digital signatures - e.g. for the node for testing the communication system, for the node for establishing at least one parameterized test case, and for the test case repository node - may each be established based on a specific signing key. Thereby, possible vulnerabilities and/or security problems may be limited to the specific node. For advantageously facilitating the validation of the respective digital signatures, a specific validation key for some or all of the specific signing keys may be stored in the distributed database and/or a chain of trust may be implemented.

In a further improvement the distributed database may implement a root of trust as a base for the chain of trust.

According to some embodiments the auditing module may further be adapted to establish the identifier of the at least one parameterized test case by computing a hash value of the at least one parameterized test case.

According to some embodiments, the auditing module may further be adapted to write, to the distributed database, also an identifier of the test parameters and/or a representation of the test parameters. This may facilitate auditing of the testing of the network functions.

According to some embodiments, the identifier of the at least one parameterized test case may comprise or consist of two parts, wherein a first part is an identifier for the at least one of the test case and a second part is an identifier for the test parameters. Thereby, the at least one test case may be identified (and thus traced) in its generic form - i.e. non-parameterized form - by the first part, while still retaining traceability/auditability for the at least one parametrized test case by the second part (combined with the first part).

In some embodiments the identifier of the at least one parameterized test case and/or an identifier of the test parameters may beneficially combine with signing the at least one (parameterized) test case, whereby the test case and resulting test data e.g. by executing the test case are linked together in a traceable and, in particular cryptographically, tamper proof manner.

A second aspect of the invention is directed to a node for establishing at least one parameterized test case. The node comprises a retrieval module, a parameterization module, and an auditing module. The retrieval module is adapted to establish at least one test case for testing of network functions of a communication system. The parameterization module is adapted to apply one or more test parameters to the at least one test case, thereby establishing the at least one parameterized test case. The auditing module is adapted to write, to a distributed database, a test specification comprising an identifier of the at least one parameterized test case.

The embodiments, advantageous modifications and further improvements as already described in detail above in connection with the first aspect of the invention as well as potential benefits and advantages also apply correspondingly to the node for establishing at least one parameterized test case according to the invention.

According to some embodiments, the test specification may further comprise the one or more test parameters and/or an identifier of the test parameters. In a further improvement, the identifier for the test parameters may be computed as a hash value of the test parameters.

A third aspect of the invention is directed to a node for testing of network functions of a communication system. The node comprises a deployment module and a monitoring module. The deployment module is adapted to transmit a deployment signal. The deployment signal is indicative of at least one parameterized test case. By transmitting the deployment signal, an execution of the at least one test case by the communication system is triggered. The monitoring module is adapted to receive test data generated by the execution of the at least one parameterized test case.

The embodiments, advantageous modifications and further improvements as already described above in detail in connection with the preceding aspects of the invention as well as potential benefits and advantages also apply to the node for testing of network functions according to the invention, correspondingly.

According to some embodiments the node for testing of network functions of a communication system may further comprise a reporting module.

In view of the deployment module, some embodiments of the communication system are adapted to execute the at least one test case, when receiving a respective deployment signal. In some communication systems, which comprise a first node and a second node, a first part of the at least one test case may be deployed to the first node and a second part of the at least one test case may be deployed to the second node, wherein the first and the second node is adapted to, in particular synchronously, execute respective parts of the at least one test case.

Some embodiments of the communication system may share a mutual time source to facilitate synchronous execution of the case or parts of it.

According to some embodiments the node for testing of network functions of a communication system may further comprise a time source module. Thereby, communication systems or nodes of them executing the at least one parameterized test case may use the time source module as a mutual time source.

A fourth aspect of the invention is directed to a method for audited testing of network functions of a communication system. The method comprises retrieving, from a test case repository node for one or more test cases for the network functions, at least one of the test cases. The method further comprises establishing an at least one parameterized test case by applying one or more test parameters to the at least one test case. The method further comprises writing, to a distributed database, a test specification comprising an identifier of the at least one parameterized test case. The method further comprises transmitting a deployment signal, which is indicative of the at least one parameterized test case and which is adapted to trigger execution of the at least one parameterized test case by the communication system. Finally, any method comprises monitoring the execution of the at least one parameterized test case by receiving test data generated by the execution.

The embodiments, advantageous modifications and further improvements as already described in detail above in connection with the preceding aspects of the invention as well as potential benefits and advantages also apply correspondingly to the method for audited testing of network functions of a communication system according to the invention.

According to some embodiments signing by a digital signature may be implemented by a cryptographic scheme employing a private key and a public key. In some advantageous modifications, the public key may be stored in the distributed database as a (respective) validation key. In some advantageous modifications, the private key may be used as a signing key and/or may be transmitted to further, trusted nodes or modules.

According to some embodiments the distributed database may be adapted to store the respective signing keys and/or validation keys in particular private keys and/or public keys in a protected, secured manner. In some advantageous modifications the keys may be protected by a cryptographical security mechanism.

According to some embodiments the distributed database may be adapted to provide access to the respective signing keys and/or validation keys in particular private keys and/or public keys depending on an access grant. In some advantageous modifications the access grant may be established by an access procedure such as checking a username and/or password against a mapping between usernames/passwords and access permissions.

The above summary is merely intended to give a short overview over some features of some embodiments and implementations and is not to be construed as limiting. Other embodiments may comprise other features than the ones explained above.

### BRIEF DESCRIPTION OF THE DRAWINGS

The above and other embodiments, advantageous modifications, further improvements, elements, features, steps and characteristics of the present disclosure will be more apparent from the following detailed description of exemplary embodiments and the appended figures. When not stated otherwise or following otherwise from the context, like reference signs refer to corresponding apparatuses, elements or features of the exemplary embodiments and throughout the figures.
- Fig. 1: represents a flow chart of a method for audited testing of network functions according to an embodiment.
- Fig. 2: is a signalling diagram for audited testing of network functions within a data network according to an embodiment.
- Fig. 3: schematically illustrates a data network comprising a test system, communication systems and distributed database according to an embodiment.
- Fig. 4: represents a flowchart of a method for audited testing of network functions according to an embodiment.

### DETAILED DESCRIPTION OF EXEMPLARY EMBODIMENTS

In the following, various embodiments of the invention will be described in detail with reference to the appended figures. It is to be understood that the following description of embodiments is not to be taken in a limiting sense. The scope of the invention is not intended to be limited by the embodiments described hereinafter or by figures, which are taken to be illustrative only.

The figures are to be regarded as being schematic representations and elements illustrated in the figures, which are not necessarily shown to scale. Rather, the various elements are represented such that their function and their general purpose become apparent to a person skilled in the art. Any connection or coupling between functional blocks, devices, components or other physical or functional units shown in the figures or described herein may also be implemented as an indirect connection or coupling. A coupling between components may be established over a wireless connection. Functional blocks may be implemented in hardware, firmware, software or a combination thereof.

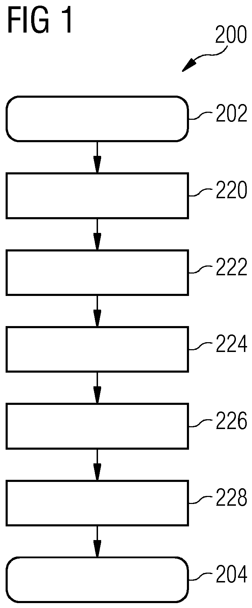

Fig. 1 shows a flowchart of a method 200 for audited testing of network functions of a communication system, the method according to an embodiment of the invention.

In an exemplary embodiment the method 200 comprises the method steps 220, 222, 224, 226 and 228. The method starts at the start of the method 202 and ends at the end of the method 204. Furthermore, one or more of the method steps, in particular a sequence of method steps and/or the whole method 200, may repeatedly be performed.

At method step 220, at least one test case is retrieved from a test case repository note for one or more test cases for the network functions.

At step 222, an at least one parameterized test case is established by applying one or more test parameters to the at least one test case.

At method step 224, a test specification comprising an identifier of the at least one parameterized test case is written to a distributed database.

At step 226, a deployment signal is transmitted to the communication system, wherein the deployment signal is indicative of the at least one parameterized test case and is adapted to trigger execution of the at least one parameterized test case by the communication system.

At step 228, the execution of the at least one parameterized test case is monitored by receiving test data generated by the execution.

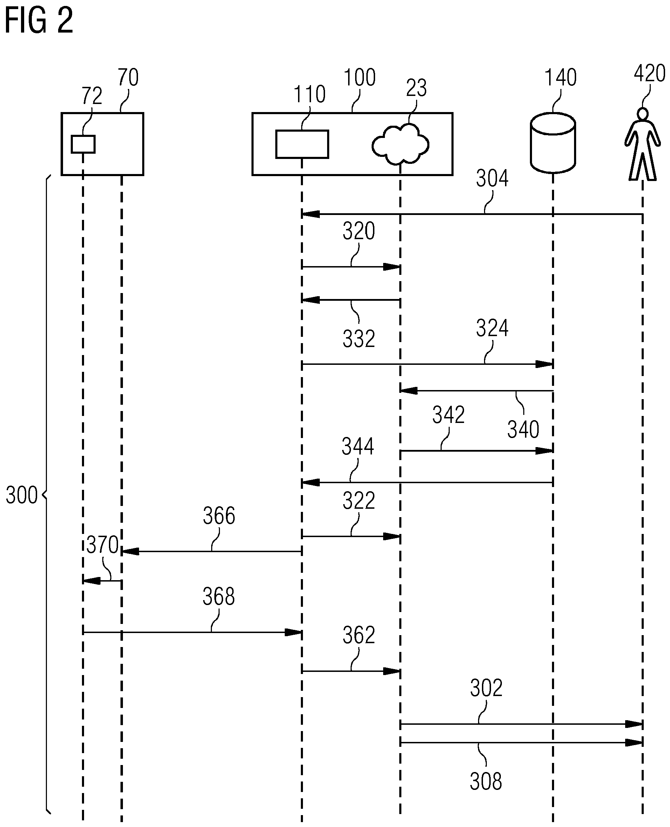

In Fig. 2 a signalling diagram 300 according to an embodiment of the invention is shown that schematically illustrates the signalling between a communication system 70, a test system 100, a test case repository node 140 and a customer 420.

In an exemplary embodiment, a data network comprises the communication system 70. Furthermore, the data network may also comprise the test system 100 and/or the test case repository node 140. Moreover, the customer 420 may be a subscriber of the data network.

In an exemplary embodiment, the communication system 70 may comprise or consist of a first communication node 72. Furthermore, the test system 100 comprises a node 110 for establishing at least one parameterized test case and testing the communication system by means of the at least one parameterized test case. Moreover, the test system 100 comprises a distributed database 23, whereas the test case repository node 140 is external to the test system. However, in an advantageous modification of the exemplary embodiment, also the distributed database 23 may be external to the test system 100 and may be provided by the data network or, alternatively, may be external to the data network, which may advantageously allow to use a generic distributed database such as Ethereum. On the other hand, the distributed database 23 being part of the test system 100 may advantageously allow to adapt the distributed database 23 to specific needs such as a restricted access to it. An advantage of the test case repository node 140 being external to the test system 100 may particularly be, that the data repository node 140 may be set up, operated and/or deployed independently and/or by another stakeholder, which may allow different stakeholders to provide test cases and/or even to set up different test case repository nodes. Yet, in some advantageous modifications of the exemplary embodiments, the test system 100 may comprise the test case repository node 140, whereby security may be enhanced.

In an implementation, the customer 420 may initiate an audited testing of network functions of the communication system 70 by sending a test request signal 304 to the node 110. Additionally or alternatively, the testing may be initiated in an automated manner, wherein such testing is started periodically - e.g. based on predefined times or time intervals - or event-based - e.g. upon a change of a configuration of the data network and/or the communication system 70.

The node 110 transmits, automatically or upon receiving the test request signal 304, a configuration request signal 320 to the distributed database 23.

The distributed database 23 is, in some advantageous modifications, adopted to keep track of a network configuration according to which the communication system 70 provides its network functions.

Additionally or alternatively, the communication system 70 (or the data network comprising the communication system) is adapted to provide its respective network functions based on a respective network configuration stored in the distributed database 23, whereby deploying network functions and/or providing network functions to customers or providers based on individual and possibly changing requirements may be facilitated. In an advantageous modification, the network configuration according to which the communication system 70 provides its network functions may be implemented by data of a service level agreement, e.g. between the customer 420 and an operator of the communication system 70.

Also, according to an advantage modification, one or more of the network functions provided by the communication system 70 are implemented as virtual network functions, whereby dynamic adaption to multiple service level agreements is facilitated. The node 110 receives the network configuration according to which the communication system 70 provides its network functions, in form of a configuration specification signal 332.

Based on the network configuration, the node 110 may request at least one of the test cases from the test case repository node 140 for one or more test cases, which is specific for the network configuration, by sending a test case request signal 324.

The test case repository node 140 requests a public test signature by transmitting a test signature request signal 340 to the distributed database 23. In some advantageous modifications, the signal 340 may be specific for the requested test case and thus the network configuration. Upon receiving a signal 340, the distributed database establishes the public test signature and stores a corresponding private key for the test signature and transmits a public test signature signal 342 to the test case repository node 140.

The naming of public and private signature is meant to elucidate, in particular, the use of the public signature and the private signature, wherein the public signature may be transmitted to several nodes and/or systems for signing the at least one test case and/or respective results, whereas the private signature is stored in the distributed database and is used to validate the signed at least one test case and/or the signed results, which may be performed solely within the distributed database or also by other nodes, systems or other entities such as the customer 420.

The test case repository node 140 receives the public test signature signal 342 and embeds the public test signature into the at least one test case and signs the at least one test case. This signed test case i.e. the at least one test case with the embedded test signature and being signed is transmitted by the test case repository node 140 in form of a test case signal 344.

The node 110 receives the test case signal 344 and may, in some advantageous modifications, parameterize the test case.

While establishing an at least one parameterized test case has been described based on requesting a specific test case from the test case repository node 140, a generic test case may be provided by the test case repository node 140, in some advantageous modifications. According to some further modifications, such a generic test case may be adapted by parameterizing it. Likewise, the test case may, in some advantageous modifications, be not signed and/or could not comprise a test signature. Another advantageous modification may establish the at least one parameterized test case by providing the at least one parameterized test case in a form that is already parameterized, e.g. by the test case repository node 140, wherein e.g. the test case repository node 140 stores test cases for respective parameters and/or or configurations of the communication system 70.

After establishing the at least one parameterized test case, the node 110 transmits a test case specification signal 322 to the distributed database 23, thereby writing a test specification comprising an identifier of the at least one parameterized test case to the distributed database, which facilitates auditing of the testing of the network functions in that it can be traced what and proven that the specific at least one test case has been established for testing the network functions. In an advantageous modification, the node 110 computes a hash value as the identifier of the at least one parameterized test case.

The node 110 transmits a deployment signal 366 to the communication system 70, the deployment signal 366 being indicative of the at least one parameterized test case, thereby triggering execution of the at least one parameterized test case by the communication system.

Upon receiving the deployment signal 366, the communication system transmits a set-up signal 370 to its node 72, thereby setting up the at least one parameterized test case and starting the execution of the at least one parameterized test case at the communication node 72.

While the at least one test case is executed or after its execution, the communication system 70, in particular, the communication node 72, sends a monitoring signal 368 to the node 110, which represents test data generated by the execution of the at least one parameterized test case.

Based on the monitoring signal 368, the node 110 evaluates the test data, which may comprise monitoring data and measurements of one or more of the network functions, which have been tested, and documents the test results in form of a test report. According to some advantageous modifications, the test node 110 may sign the test results, i.e. the test report, by the public test signature.

By a test report signal 362, the (signed) test report is written to the distributed database 23.

By writing the test report to the distributed database 23, the results of the testing of the network functions may be audited during the testing or later on. In an advantageous modification, the customer 420 receives a validating key signal 302, which may comprise the private key for test signature, and a test result signal 308 being indicative of the measurements conducted during the testing of the network functions and/or the course of execution of these measurements and which may comprise the test report. Furthermore, the customer 420 may validate the test result signal 308 and/or the test report by the validating key signal 302.

In some advantageous modifications, the distributed database 23 may validate the origin of the test report, in particular, upon receiving the test report signal 362 and/or prior to storing the test report, based on its private key for the test signature.

While the signalling diagram 300 has been described with a customer 420, the testing may also be initiated and, in an advantageous modification, be evaluated by an industrial system that is using the communication system for network communication. Hence, the industrial system may be additional to the customer, may replace the customer (in the signalling diagram), or may be a proxy of the customer i.e. the customer may set-up and/or operate the industrial system and, in particular, use the industrial system for an industrial process such as manufacturing. In some advantageous modifications, the industrial system may comprise a customer node that is adapted to communicate via/with the communication system 70 - e.g. in order to provide acquired data from an industrial process and/or to receive control data for controlling the industrial process. In yet a further modification, the customer node may be part of the communication system and may, in particular, be identified with the communication node 72.

In some advantageous modifications, the industrial system may run a SCADA (Supervisory Control and Data Acquisition) application in particular on the customer node or the communication node 72. In an implementation the SCADA application may automatically initiate the testing by sending a signal accordant to signal 304. In a further improved implementation the SCADA application may evaluate the results of the testing by receiving a signal accordant to signal 308 and (possibly) a signal accordant to signal 302, wherein the SCADA application determines whether the network functions provided by the commination system 70 and proofed by the test results i.e. the measurements conducted during the testing of the network functions and/or the course of execution of these measurements and which may comprise the test report are according to requested parameters and/or sufficient for monitoring and/or controlling the industrial process by the SCADA application.

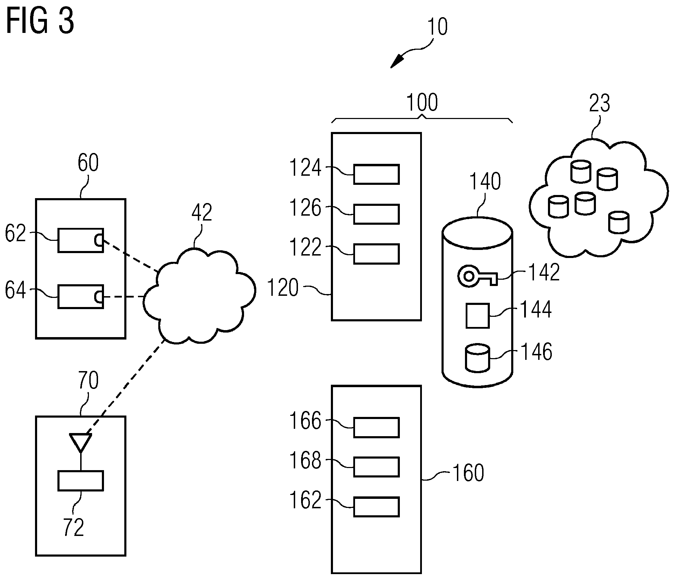

Fig. 3 schematically illustrates a data network 10 comprising a test system 100, a distributed database 23, a communication system 60, and a further communication system 70; the data network and/or some or all of the illustrated parts of it each according to an embodiment of the invention.

In an exemplary embodiment, the distributed database 23 is implemented as joint distributed infrastructure network including multiple infrastructure nodes (e.g. blockchain full nodes). According to an advantageous modification the distributed database may be implemented as a blockchain supporting smart contracts like Ethereum.

The distributed database 23 may be adapted to transmit and/or receive the respective signals, which have been described with reference to Fig. 2. In particular, the distributed database 23 may be adapted to establish and store a public/private key pair for signing and validating the at least one test case. In some advantageous modifications, the distributed database may be adapted to store the private key by writing it, to the distributed database, in a form encoded by a cryptographical security mechanism.

In an exemplary embodiment, the communication system 60 comprises a first communication node 62 and a second communication node 64. The communication system 60 is adapted to provide, as a network function, a data transfer between the first and the second node 62, 64 via the Internet 42.

In an exemplary embodiment, the communication system 70 comprises a communication node 72 and/or comprises only one communication node 72. The communication node 72 is adapted to provide, as a network function, wireless data transfer via the Internet 42, and may in some advantageous modifications, be adapted to provide data transfer between the communication node 72, and at least one of the communication nodes 62 and 64.

In an exemplary embodiment, the test system 100 comprises a node 120 for establishing at least one parameterized test case, a test case repository node 140, and a node 160 for testing the communication system 60 or 70.

The node 120 comprises a retrieval module 124 that is adapted to retrieve at least one of the test cases from the test case repository 140. In some advantageous modifications, the retrieval module 124 is adapted to send signals, which are similar to those described with reference to Fig. 2, such as to establish and/or retrieve the at least one test case such as a configuration request signal 320, a configuration specification signal 332, a test case request signal 324, and a test case signal 344.

A parameterization module 126 of the node 120 is adapted to apply one or more test parameters to the at least one of the test cases, thereby establishing the at least one parameterized test case.

An auditing module 122 of the node 120 is adapted to write, to the distributed database 23, a test specification comprising an identifier of the at least one parameterized test case. In some advantageous modifications, the auditing module 122 may compute a hash value of the at least one parameterized test case and transmit a test case specification signal 322 - similar to the one illustrated with reference to Fig. 2 - to distributed database 23.

The node 160 comprises a deployment module 166, which is adapted to transmit a deployment signal 366, the deployment signal being indicative of the at least one parameterized test case, thereby triggering execution of the at least one test case by the communication system 60 or 70. In some advantageous modifications, the deployment module 166 may be adapted to transmit the deployment signal directly or indirectly to one or more of the nodes of the communication systems, e.g. to one or more of the communication nodes 62, 64, and/or 72.

Furthermore, the node 160 comprises a monitoring module 168. The monitoring module 168 is adapted to receive test data generated by the execution of the at least one parameterized test case. In some advantageous modifications, the monitoring module 168 is adapted to receive the test data in form of a monitoring signal 368, e.g. as illustrated with reference to Fig. 2.

Furthermore, the node 160 comprises a reporting module 162, the reporting module being adapted to write, to the distributed database 23, a test report based on the test data, e.g. by transmitting a test report signal 362. Moreover, the reporting module 162 may be adapted, in some advantageous modifications, to sign the test report by a digital signature.

For signing the at least one (parameterized) test case and/or the test report, the test case repository node 140 may comprise a digital signature module. The digital signature module 142 is adapted to transmit a signature key request signal to the distributed database 23 and to receive a signing key from the distributed database. The signature key request signal, which may be the test signature request signal 340 of Fig. 2, is adapted to trigger the distributed database 23 to provide the signature key for the at least one test case and to start a respective validation key.

The test case repository note 140 comprises a data storage device 146 that is adapted to store the one or more test cases. In some advantageous modifications, the at least one test case may be (readily) stored in the data storage device 146.

Moreover, the node 140 comprises a provider module 144 that is adapted to provide the at least one test case. Furthermore, in an advantageous modification for signing by a digital signature, the provider module 144 is further adapted to sign, by a digital signature for the test case repository node based on the signing key, the at least one test case.

While the nodes 120 and 160 have been described as separate nodes, it is to be understood, that these nodes and their modules may be combined into a single node such as the node 110 described with reference to Fig. 2.

In an exemplary embodiment, the communication system 60 is adapted to receive, from the deployment module 166, the deployment signal 366 and to set up and start the at least one parameterized test case. In an advantageous modification, the at least one parameterized test case comprises a traffic generator, a measurement probe as well as a first and a second test procedure. The first test procedure is to be executed on the first communication node 62 and generates by means of the traffic generator traffic data which is to be transferred via the network function provided by the communication system 60 from the first node 62 to the second node 64. That second test procedure is to be executed on the second node 64 and receives the data via the network function from the first node 62 and measures by means of the measurement probe the resulting traffic data, whereby transfer characteristics such as data throughput, latency and possible data loss may be established.

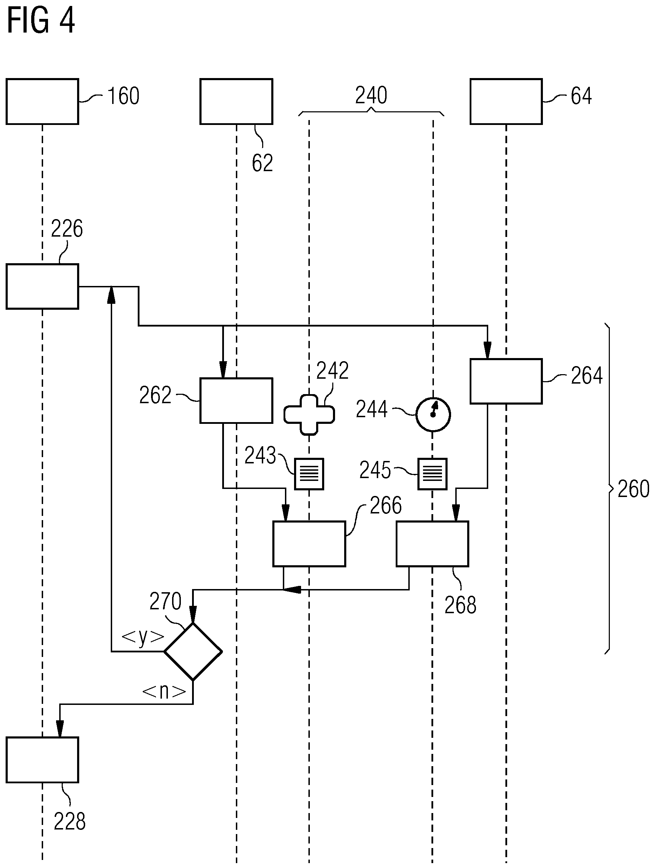

Fig. 4 shows a flowchart of a method 260 for testing of network functions by means of an at least one parameterized test case 240, each according to an embodiment of the invention.

The method 260 may be linked to / combined with the method 200 described with reference to Fig. 1, therefore also the method step 226, e.g. transmitting a deployment signal, and the method step 228, e.g. monitoring the execution of the at least one parameterized test case, are shown in Fig. 4.

Furthermore, Fig. 4 schematically illustrates a node 160 for testing of network functions of a communication system, a first communication node 62 and a second communication node 64 as well as the at least one parameterized test case 240.

In an exemplary embodiment, the at least one parameterized test case 240 is deployed to the first node 62 and the second node 64 at method step 226.

In an exemplary embodiment, the at least one parameterized test case comprises a traffic generator 242 with respective test parameters 243 and a measurement probe 244 with respective test parameters 245.

In an exemplary embodiment, the method 260 for testing network functions, in particular for testing the network functions of a communication system comprising the nodes 62 and 64 and providing a data transfer between these nodes as a network function to be tested, comprises the method steps 262, 264, 266, and 268 as well as the method condition 270.

In an advantageous modification, the at least one parameterized test case 240 may also comprise a test procedure which implements the method 260.

At method step 262, the first communication node 62 sets up the traffic generator 242 by applying the respective test parameters 243, which may comprise one or more of: an IP address of the second communication node 64, an amount of traffic, and a minimum or maximum data rate.

At method step 264, the second communication node 64 sets up the measurement probe 244 by applying the test parameters 245, wherein the test parameters may specify one or more of: an IP address of the communication node 62 for receiving data, a specific interface, and a specific port.

At method step 266, the traffic generator 242 generates traffic data and transmits it via the network function to the second communication node 64.

At method step 268, the measurement probe 244 receives the generated traffic data and measures timing, data throughput and/or quality of the data.

At the method condition 270, it is determined, whether an additional run of the test procedure, e.g. the preceding method steps, or another test procedure is to be performed. If this is the case - which is indicated by <y> - e.g. the preceding method steps are repeated starting from method steps 262 and 264. Otherwise - which is indicated by <n> - the execution of the at least one parameterized test case is monitored by receiving test data generated by the execution, at method step 228.

Although the invention has been shown and described with respect to certain preferred embodiments, equivalents and modifications will occur to others skilled in the art upon reading and understanding of the specification. The present invention includes all such equivalents and modifications and is limited only by the scope of the appended claims.

For example, while monitoring of the execution of the at least one parameterized test case has been described as being performed after conducting the test case, a similar method can be readily applied, which synchronously or concurrently performs the at least one parameterized test case and monitors the resulting test data or respective - in particular available parts of it.

For example, while the test system 100 has been described as being separate from the communication system 60 or 70, the communication system 60 or 70 may comprise the test system or parts of it, whereby the communication system may be enabled to perform a self-test. In some advantageous modifications the communication system may comprise node 110, node 120, node 140 and/or node 160.

## Claims

1. A test system (100) for auditing testing of network functions of a communication system (60, 70), the test system comprising:
a test case repository node (140) that is adapted to provide one or more test cases for the network functions; and
a node (120) for establishing at least one parameterized test case, the node comprising:
a retrieval module (124) adapted to retrieve at least one of the test cases from the test case repository node (140),
a parameterization module (126) adapted to apply one or more test parameters to the at least one of the test cases, thereby establishing the at least one parameterized test case, and
an auditing module (122) adapted to write, to a distributed database, a test specification comprising an identifier of the at least one parameterized test case.

2. The test system (100) of claim 1, which further comprises a node (160) for testing the communication system, the node comprising:
a deployment module (166) adapted to transmit a deployment signal (366), the deployment signal being indicative of the at least one parameterized test case, thereby triggering execution the at least one parameterized test case by the communication system (60, 70); and
a monitoring module (168) adapted to receive test data generated by the execution of the at least one parameterized test case.

3. The test system (100) of claim 2, wherein the node (160) for testing the communication system further comprises a reporting module (162) adapted to write, to the distributed database, a test report based on the test data.

4. The test system (100) of claim 3, wherein the reporting module (162) is further adapted to sign, by a digital signature for the node for testing the communication system, the test report.

5. The test system (100) of claim 3 or claim 4, wherein:
the test data comprises monitoring data, which indicates a course of the execution of the at least one parameterized test case, and measurement data, which indicates a performance of one or more tested network functions of the network functions of the communication system (60, 70); and
the reporting module (162) is adapted to establish the test report based on the monitoring data, the measurement data, and the one or more test parameters.

6. The test system (100) of any one of the preceding claims, wherein the at least one test case:
comprises at least one test procedure for testing at least one of the network functions of the communication system; and
defines a course of execution of the at least one test procedure.

7. The test system (100) of claim 6, wherein:
the at least one test case further comprises at least one traffic generator (242) and at least one measurement probe (244);
the at least one test procedure is adapted to test a data throughput capacity of the at least one of the network functions and/or a respective timing by applying traffic data, which is generated by means of the at least one traffic generator (242), to the at least one of the network functions at a first node (62; 72) of the communication system (60; 70) and by measuring, at the first (72) or at a second node (64) of the communication system, a resulting traffic data or a resulting timing by means of the at least one measurement probe (244).

8. The test system (100) of claim 6 or claim 7, wherein the at least one test case further comprises at least one of a further test procedure, a traffic generator, a measurement probe, or a respective description.

9. The test system (100) of any one of the preceding claims, wherein at least one of the network functions of the communication system is a virtual network function.

10. The test system (100) of any one of the preceding claims, wherein the retrieval module (124) is further adapted:
- to read, from the distributed database, a network configuration according to which the communication system (60, 70) provides its network functions;
- to select the at least one of the test cases based on the network configuration; and
- to request, from the test case repository node (140), the at least one test case.

11. The test system (100) of any one of the preceding claims, wherein the auditing module (122) is further adapted to sign, by a digital signature for the node for establishing at least one parameterized test case, the test specification.

12. The test system (100) according to any one of the preceding claims, wherein the test case repository node (140) comprises:
a digital signature module (142) adapted to transmit a signature key request signal (340) to the distributed database and to receive a signing key from the distributed database, wherein the signature key request signal (340) is adapted to trigger the distributed database to provide the signature key for the at least one test case and to store a respective validation key; and
a provider module (144) adapted to provide the at least one test case and to sign, by a digital signature for the test case repository node based on the signing key, the at least one test case.

13. A node (120, 110) for establishing at least one parameterized test case, the node comprising:
a retrieval module (124) adapted to establish at least one test case for testing of network functions of a communication system;
a parameterization module (126) adapted to apply one or more test parameters to the at least one test case, thereby establishing the at least one parameterized test case; and
an auditing module (122) adapted to write, to a distributed database (23), a test specification comprising an identifier of the at least one parameterized test case.

14. A node (160, 110) for testing of network functions of a communication system, the node comprising:
a deployment module (166) adapted to transmit a deployment signal (366), the deployment signal being indicative of at least one parameterized test case (240), thereby triggering execution of the at least one parameterized test case by the communication system (60, 70); and
a monitoring module (168) adapted to receive test data generated by the execution of the at least one parameterized test case (240).

15. A method (200) for audited testing of network functions of a communication system (60, 70), the method comprising:
- (220) retrieving, from a test case repository node (140) for one or more test cases for the network functions, at least one of the test cases;
- (222) establishing an at least one parameterized test case (240) by applying one or more test parameters to the at least one test case;
- (224) writing, to a distributed database (23), a test specification comprising an identifier of the at least one parameterized test case;
- (226) transmitting a deployment signal (366), the deployment signal being indicative of the at least one parameterized test case (240) and being adapted to trigger execution of the at least one parameterized test case by the communication system (60, 70); and
- (228) monitoring the execution of the at least one parameterized test case by receiving test data generated by the execution.
